(19) **Europäisches Patentamt**

**European Patent Office**

**Office européen des brevets**

(11) **EP 1 456 565 B1**

(12) **FASCICULE DE BREVET EUROPEEN**

(45) Date de publication et mention
de la délivrance du brevet:
**18.01.2006 Bulletin 2006/03**

(21) Numéro de dépôt: **02801159.1**

(22) Date de dépôt: **20.12.2002**

(51) Int Cl.:
*F16H 37/12* (2006.01)    *F16H 21/40* (2006.01)
*B64C 25/20* (2006.01)

(86) Numéro de dépôt international:
**PCT/FR2002/004490**

(87) Numéro de publication internationale:
**WO 2003/054423 (03.07.2003 Gazette 2003/27)**

(54) **PERFECTIONNEMENTS AUX ACTIONNEURS ELECTROMECANIQUES**

VERBESSERUNGEN VON ELEKTROMECHANISCHEN AKTUATOREN

IMPROVEMENTS TO ELECTROMECHANICAL ACTUATORS

(84) Etats contractants désignés:
**DE ES FR GB IT**

(30) Priorité: **20.12.2001 FR 0116711**

(43) Date de publication de la demande:
**15.09.2004 Bulletin 2004/38**

(73) Titulaire: **SAGEM S.A.**
**75015 Paris (FR)**

(72) Inventeurs:
• **GOUZE, Philippe**
**F-91360 Villemoisson (FR)**

• **JONCOUR, Yvon**
**F-95520 Osny (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**DE-B- 3 009 418**          **DE-C- 41 605**
**GB-A- 2 184 196**          **US-A- 3 942 385**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

DOMAINE GENERAL ET ETAT DE LA TECNIQUE

La présente invention concerne les actionneurs électromécaniques.

Elle trouve avantageusement application pour les actionneurs équipant les boîtiers d'accrochages de trains d'atterrissage et leurs portes sur des aéronefs.

Le document US 3 942 385 décrit un actionneur mécanique comportant un moteur et des moyens de couplage qui entraînent un axe de sortie.

Le but général du dispositif proposé est en particulier d'assurer en mode secours le déverrouillage mécanique permettant la sortie du train d'atterrissage par gravité.

Ce but est atteint, selon l'invention grâce à un actionneur tel que défini dans la revendication 1.

PRESENTATION DE L'INVENTION.

La solution proposée repose notamment sur l'utilisation de technologies éprouvées, mais dont la mise en oeuvre permet, par rapport à des solutions traditionnelles, un gain en masse, une architecture simple, et une consommation de courant réduite. La masse réduite en dehors de son impact direct, permet de réduire les contraintes mécaniques liées aux accélérations élevées dans le cadre de son utilisation, l'architecture simple et le nombre réduit de pièces, permet de garantir un niveau de fiabilité élevé. Enfin, la consommation réduite due à un rendement élevé de l'actionneur, présente non seulement un intérêt au niveau générateur, mais aussi évite échauffement et contraintes préjudiciables à une bonne fiabilité.

Plus précisément, l'invention propose un actionneur électromécanique comportant au moins un moteur électrique, ainsi que des moyens de couplage et de réduction, qui entraînent un axe de sortie caractérisé en ce que ces moyens de couplage et de réduction engrènent avec un plateau manivelle apte à être déplacé en rotation avec une course angulaire limitée par deux butées, une biellette étant articulée à une extrémité sur un maneton dudit plateau manivelle et étant articulée à son autre extrémité sur une bielle de grande longueur qui est elle même solidaire de l'axe de sortie, les deux extrémités de cette bielle de grande longueur étant respectivement guidées en déplacement chacune le long d'un guide, et en ce que l'angle de débattement entre ces deux butées est supérieur à 180°, les mouvements de la bielle se trouvant structurellement verrouillés lorsque à la suite d'un surpassement, le plateau manivelle se trouve au voisinage immédiat d'une de ses limites de course.

PRESENTATION DES FIGURES

D'autres caractéristiques et avantages de l'invention ressortiront encore de la description qui suit qui est purement illustrative et non limitative et doit être lue en regard des dessins annexés sur lesquels :

- les figures 1 et 2 sont des chaînes cinématiques illustrant un premier mode de réalisation possible pour l'invention ;
- les figures 3 et 4 sont des chaînes cinématiques illustrant un autre mode de réalisation possible pour l'invention ;

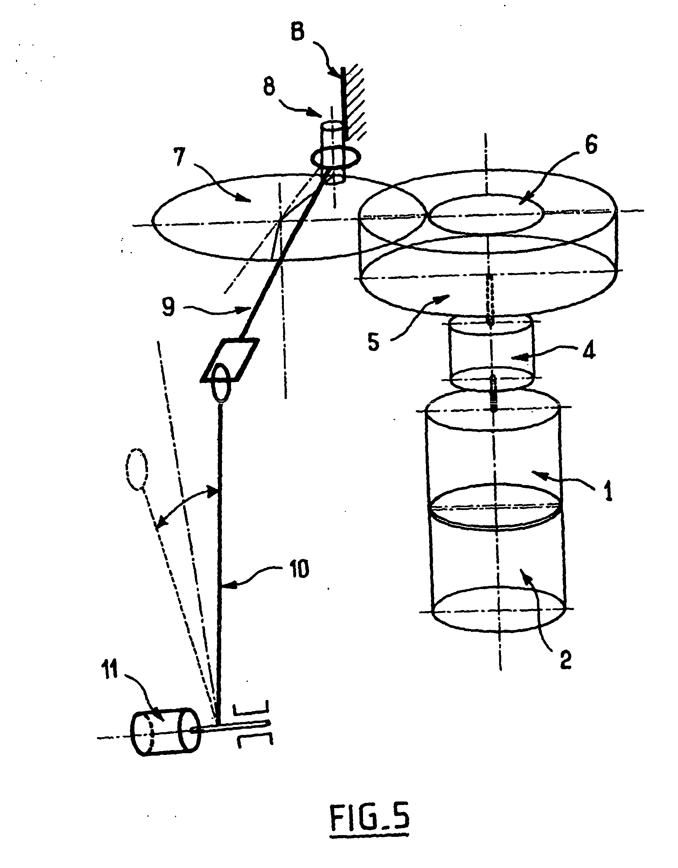

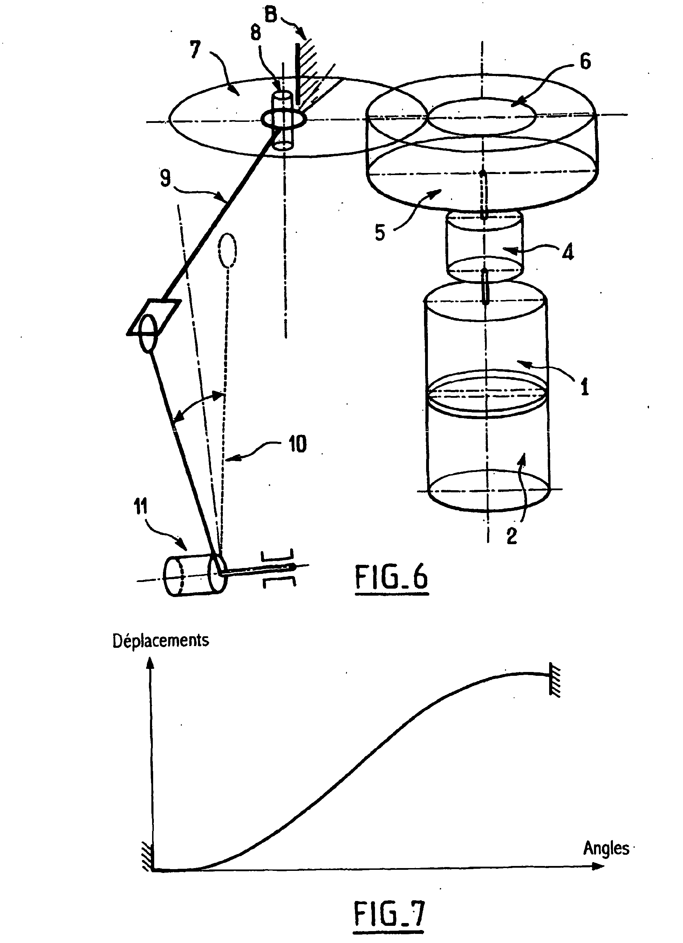

- les figures 5 et 6 sont des représentations schématiques en perspective illustrant le débattement de la bielle du mode de réalisation des figures 3 et 4 ;
- la figure 7 est la courbe du déplacement angulaire de la bielle en fonction en fonction de la position angulaire du plateau manivelle.

DESCRIPTION D'UN OU PLUSIEURS MODES DE REALISATION DE L'INVENTION

GENERALITES

On décrit ci après deux modes de réalisation.

Dans l'un et l'autre de ces deux modes, on notera l'absence de différentiel et de roue/vis tangente. Ces choix permettent :

☐ Fiabilité (par la réduction du nombre de pièces et l'architecture),
☐ Consommation (par un rendement moteur/sortie élevé),
☐ Environnement vibratoire

L'actionneur conforme au premier mode de réalisation présente une définition particulièrement simple et un nombre réduit de pièces.

Il comporte :

☐ Un moteur asynchrone triphasé composé d'un rotor cage d'écureuil, d'un stator double bobinage isolé, et de protections contre les blocages. Ce moteur est dérivé d'applications « spatiales ». Les parties mobiles sont de masse réduite pour supporter vibration et chocs.
☐ Un coupleur synchrone à aimant permanent, permettant de débrayer le moteur lorsque l'actionneur arrive en butée.
☐ Un réducteur réversible de rendement élevé.
☐ Un dispositif irréversible à leviers, permettant d'assurer l'irréversibilité en fin de course. Ce dispositif évite l'utilisation de vis tangente préjudiciable au rendement et donc l'utilisation d'un moteur « surdimensionné », et assure une irréversibilité « positive » indépendant des vibrations.

L'actionneur conforme au deuxième mode de réalisation comporte quant à lui les éléments suivants :

☐ Deux moteurs asynchrones triphasés classiques.
☐ Deux coupleurs composés chacun d'un coupleur centrifuge, et d'un coupleur synchrone. Ces coupleurs permettent de débrayer les moteurs lorsque l'actionneur arrive en butée, et d'assurer un fonctionnement en cas de blocage moteur. L'utilisation de tels dispositifs permet d'assurer un
☐ Un réducteur et un dispositif à levier.

## PREMIER MODE DE REALISATION

La solution retenue permet d'utiliser le même actionneur pour les différentes applications de boîtiers d'accrochage dits « UPLOCKS ».

Des variantes peuvent bien entendu être adaptées en fonction des courses de déplacement.

Les solutions mises en oeuvre pour assurer les fonctions des actionneurs se présentent dans l'architecture décrite ci-après :

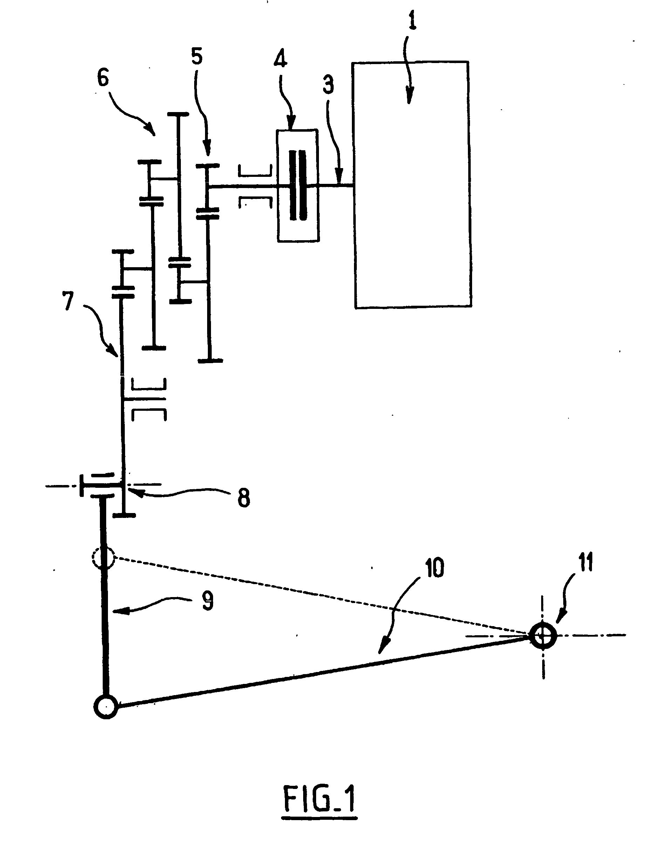

Le schéma de la chaîne cinématique est représenté à la FIGURE 1.

Le moteur 1 de technologie asynchrone triphasée, alimentés en 115 V alternatif à fréquence variable entre 360 et 800 Hz, possède un double bobinage au stator et un seul rotor. Chaque bobinage est indépendant et isolé électriquement.

Cette solution présente l'avantage d'être beaucoup plus fiable qu'une autre technologie de moteur . En effet, le nombre de pièces et de composants est réduit dans la construction du moteur, dans sa commande, dans son filtrage EMC/EMI. De plus le nombre de pièces en mouvement est limité au strict nécessaire ce qui est préférable à deux moteurs couplés sur un train d'engrenages à différentiel.

Ce dispositif fonctionne sans circuit électronique ce qui évite notamment les inconvénients liés à la fiabilité et à l'obsolescence des composants actifs ou passifs.

L'arbre de sortie (3) qui est unique est couplé directement à un limiteur de couple (rep 4) destiné à amortir le choc de l'arrêt brutal des éléments de la chaîne cinématique lorsque la sortie du réducteur ou l'arbre de sortie viennent heurter les butées mécanique en fin de course. Ce limiteur permet aussi au moteur de continuer à tourner lorsque le réducteur est à l'arrêt ce qui préserve la durée de vie des bobinages.

Ce limiteur de couple à technologie magnétique (rep 4) qui présente l'intérêt de transmettre un faible couple donc d'avoir de faibles dimensions.

De plus, cette technique a l'avantage de réduire considérablement la dissipation d'énergie fournie par le moteur lorsque l'arbre de sortie est en butée parce que la perte de synchronisme entraîne le décrochage magnétique donc la chute du couple dans la transmission. Le moteur tourne alors pratiquement à vide.

La sortie du limiteur de couple est munie d'un pignon (rep 5) qui s'engrène directement sur le premier étage d'un réducteur (rep 6) à dentures droites. Pour obtenir un bon rendement de ce réducteur, les premiers étages sont munis de roulements à billes précontraints aux paliers. Les étages de sortie possèdent des bagues lisses.

Le pignon de sortie du réducteur s'engrène directement avec un plateau-manivelle 7 muni d'une roue dentée et d'un maneton 8. Ce plateau est animé d'un mouvement de rotation dont l'amplitude angulaire est limitée à environ 200° par 2 butées solidaires du corps de l'actionneur. Ces butées mécaniques permettent le verrouillage d'une biellette 9 en extrémité de course du plateau 7

Cette biellette 9 de courte longueur dont la tête est articulée sur le maneton du plateau-manivelle 7. Elle imprime un mouvement de rotation à l'extrémité d'une bielle 10 de grande longueur circulant entre 2 guides. L'autre extrémité de cette bielle est solidaire de l'axe de sortie de l'actionneur pour transmettre un mouvement de rotation limité (par exemple à 12 ° ou 13°).

Ce système mécanique forme une cinématique qui se verrouille aux extrémités de la course angulaire

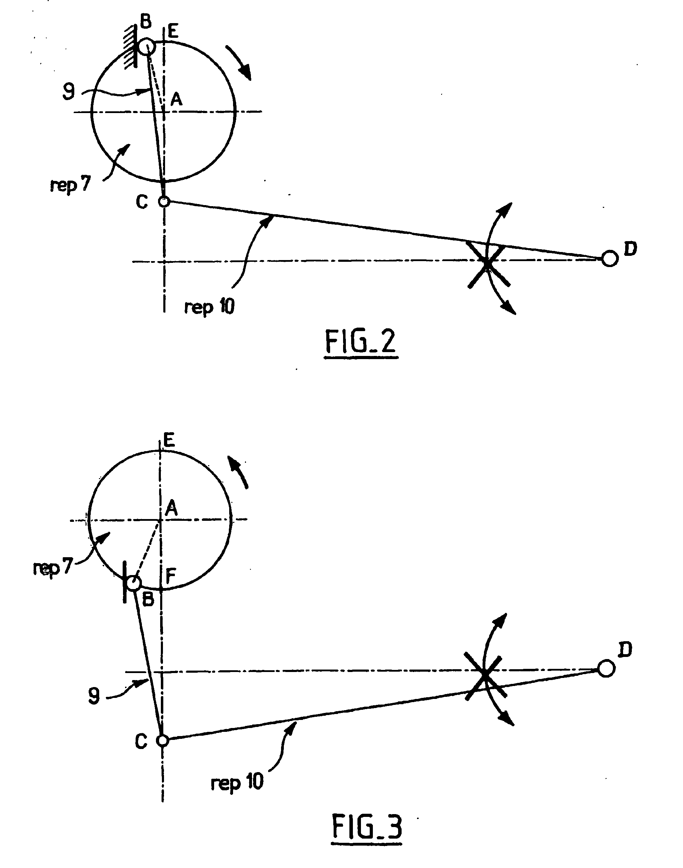

Dans sa rotation en sens anti horaire (CCW) le point B symbolisant le maneton du plateau, vient en contact avec la butée mécanique CCW (cette butée peut être externe à l'actionneur) après avoir surpassé le point E (voir l'illustration de la fig 2). Ce point E est fixe par rapport au carter de l'actionneur et est la limite de la course matérialisant le non retour possible du mouvement du plateau par l'action de la biellette sans rencontrer la butée CCW.

Le système bielle+biellette+plateau+butée se trouve ainsi verrouillé dans le sens antihoraire (CCW) par tout mouvement venant de la bielle donc de l'axe de sortie de l'actionneur symbolisé par le pt D (voir la position de la fig 2).

Seule l'inversion du sens de rotation du plateau 7, qui peut tourner dans le sens horaire, permet à la biellette 9 et à la bielle 10 de se déplacer, et ainsi déverrouiller la cinématique .

Alors cette bielle se déplace d'abord vers la butée externe à l'actionneur en appliquant une contrainte au sous-ensemble biellette + bielle, à ce moment là l'axe de sortie (pt D) ne tourne pas. Cette contrainte est absorbée par une déformation élastique d'une des pièces (de forme judicieuse) composant la cinématique. Cette déformation atteint son maximum lorsque le point B (maneton) rencontre le point E et décroît au delà jusqu'à libérer l'axe de sortie en rotation.

Ainsi après avoir dépassé le point E (fixe par rapport au carter) le maneton va rejoindre l'autre butée CW en tournant dans le sens horaire (CW).

Dans sa rotation en sens horaire (CW) le point B symbolisant le maneton du plateau, vient cette fois en contact avec la butée mécanique CW (cette butée peut être externe à l'actionneur) après avoir surpassé le point F (voir l'illustration de la fig 3). Ce point F est fixe par rapport au carter de l'actionneur et est la limite de la course matérialisant le non retour possible du mouvement du plateau par l'action de la biellette sans rencontrer la butée CW.

Le système bielle+biellette+plateau+butée se trouve ainsi verrouillé dans le sens horaire (CW) par tout mouvement venant de la bielle donc de l'axe de sortie de l'actionneur symbolisé par le pt D (voir la position de la fig 3).

Seule l'inversion du sens de rotation du plateau 7, qui peut tourner dans le sens antihoraire, permet à la biellette 9 et à la bielle 10 de se déplacer, et ainsi déverrouiller la cinématique .

Alors cette bielle se déplace d'abord vers la butée externe à l'actionneur en appliquant une contrainte au sous-ensemble biellette + bielle, à ce moment là l'axe de sortie (pt D) ne tourne pas. Cette contrainte est absorbée par une déformation élastique d'une des pièces (de forme judicieuse) composant la cinématique. Cette déformation atteint son maximum lorsque le point B (maneton) rencontre le point F et décroît au delà jusqu'à libérer l'axe de sortie en rotation.

Ainsi après avoir dépassé le point F (fixe par rapport au carter) le maneton va a nouveau rejoindre l'autre butée CCW en tournant dans le sens horaire (CCW).

## DEUXIEME MODE DE REALISATION

Comme pour l'option 1, le principe retenu consiste également à utiliser le même actionneur pour les 7 applications différentes de boîtiersd'accrochage « UPLOCKS ». Si nécessaire, une variante pourra être adaptée pour distinguer les courses en débattement de 13° par rapport à celles de 12°.

Les solutions mises en oeuvre pour assurer les fonctions des actionneurs se présentent dans l'architecture décrite ci-après :

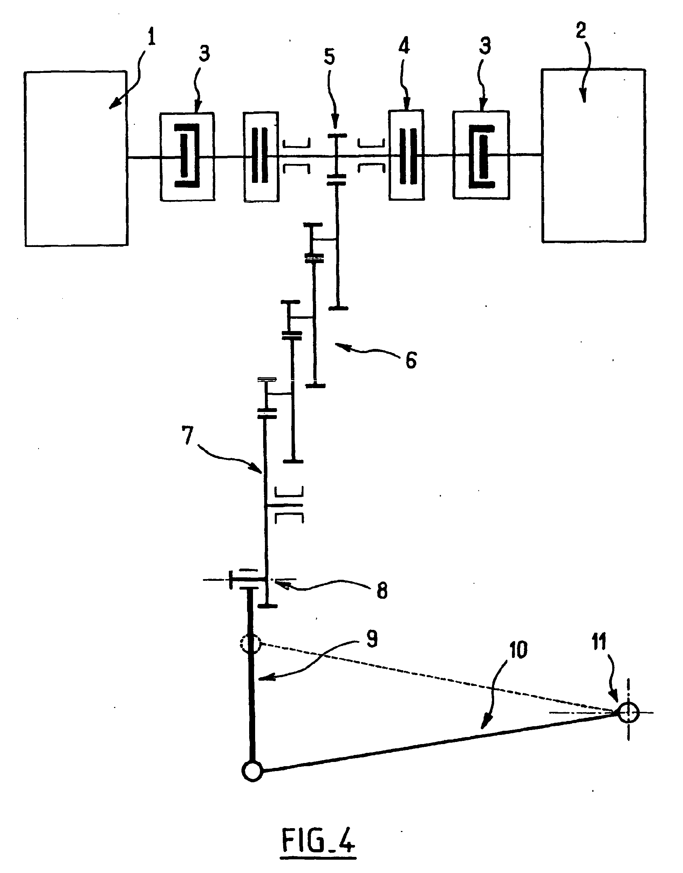

Le schéma de la chaîne cinématique est représenté à la FIGURE 4 à la page suivante.

Deux moteurs (rep 1 et 2) de technologie asynchrone triphasée, alimentés en 115 V alternatif à fréquence variable entre 360 et 800 Hz, possèdent un simple bobinage au stator.

Cette solution présente l'avantage d'être beaucoup plus fiable qu'une autre technologie de moteur . En effet, le nombre de pièces et de composants est réduit dans la construction du moteur, dans sa commande, dans son filtrage EMC/EMI. De plus le nombre de pièces en mouvement est réduit ce qui est préférable à deux moteurs couplés sur un train d'engrenages à différentiel.

Ce dispositif fonctionne sans circuit électronique ce qui évite notamment les inconvénients liés à la fiabilité et à l'obsolescence des composants actifs ou passifs.

L'arbre de sortie de chacun des moteurs est couplé directement à un embrayage centrifuge 3 qui permet de désolidariser le rotor d'un moteur en panne de la chaîne cinématique de l'actionneur. Ainsi le moteur valide peut démarrer sans entraîner la charge supplémentaire du moteur défaillant.

La sortie de l'embrayage centrifuge est reliée un limiteur de couple 4 destiné à amortir le choc de l'arrêt brutal des éléments de la chaîne cinématique lorsque la sortie du réducteur ou l'arbre de sortie viennent heurter les butées mécanique en fin de course. Ce limiteur permet aussi au moteur de continuer à tourner lorsque le réducteur est à l'arrêt ce qui préserve la durée de vie des bobinages.

Ce limiteur est à technologie magnétique 4 qui présente l'intérêt de transmettre un faible couple donc d'avoir de faibles dimensions.

De plus, cette technique a l'avantage de réduire considérablement la dissipation d'énergie fournie par le moteur lorsque l'arbre de sortie est en butée parce que la perte de synchronisme entraîne le décrochage magnétique donc la chute du couple dans la transmission. Le moteur tourne alors pratiquement à vide.

La sortie de chacun des deux limiteurs 4 est couplée à un pignon 5 qui s'engrène directement sur le premier étage d'un réducteur 6 à dentures droites. Pour obtenir un bon rendement de ce réducteur, les premiers étages sont munis de roulements à billes précontraints aux paliers. Les étages de sortie possèdent des bagues lisses.

Le pignon de sortie du réducteur s'engrène directement avec un plateau-manivelle 7 muni d'une roue dentée et d'un maneton 8. Ce plateau est relié au système d'embiellage permettant le verrouillage irréversible de l'arbre de sortie (rep 11) aux extrémité de sa course, cette disposition est identique à celle du premier mode de réalisation.

La description du fonctionnement du système d'irréversibilité est exposée plus haut dans la solution de du premier mode de réalisation.

EXEMPLE DE DIMENSIONNEMENTS

Le rapport de réduction est élevé et calculé sur la base de moteurs à 2 paires de pôles :

N moteur = 10500 t/mn pour un faible glissement, soit 175 t/s lorsque la fréquence est à 360 Hz

Le maneton de sortie (rep 8 de la fig 1) du réducteur doit tourner à 0.24 t/s.

Le rapport est donc de 175/0.24 = 729 pour le réducteur

Le réducteur (rep 6) est composé de 4 étages :

- R1 sur plateau manivelle = 5.8 (module de 0.75 mm)
- R2 = R3 = R4 = 5 (module de 0.5 mm) avec roues étagées identiques.

Le rapport du réducteur est donc de: 5.8x125 = 725

Le pignon d'attaque (sortie moteur) possède 15 dents

Le rendement du réducteur est de : 0.92x0.97x0.97x0.97 = 0.84

- 0.92 pour R1
- 0.97 pour R2, R3 et R4

Le rendement du système bielle-manivelle est de : 0.98x0.92x0.95 = 0.85

- 0.98 pour l'axe de sortie
- 0.92 pour l'accouplement des bielles (coulisseau compris)
- 0.95 pour la manivelle

Soit un rendement mécanique global de 0.89x0.88 = 0.71

Le couple d'entrée à vaincre est de 60 N.m (AT) en 2.5 sec ou bien 120 N.m (2AT) en beaucoup plus de temps.

La réduction du système de bielles est d'environ 10

Pour prévenir les effets de dévirement en présence de l'environnement mécanique (vibrations, chocs, secousses ...), un couple de friction pour le maintien de la manivelle en butée est à prévoir sur le premier étage du réducteur: soit environ 0,001 Nm . Cette friction est réalisée par un organe magnétique à aimants permanents.

Le dimensionnement du moteur pour un seul bobinage est le suivant :

Couple à entraîner dans les pires conditions :

$$(60 / 10 / 725 / 0.71) + 0.001 = 0.013 \text{ Nm}$$

**Revendications**

1. Actionneur électromécanique comportant au moins un moteur (1) électrique, ainsi que des moyens de couplage et de réduction, qui entraînent un axe de sortie
**caractérisé en ce que** ces moyens de couplage et de réduction engrènent avec un plateau manivelle (7) apte à être déplacé en rotation avec une course angulaire limitée par deux butées, une biellette (9) étant articulée à une extrémité sur un maneton (8) dudit plateau manivelle (7) et étant articulée à son autre extrémité sur une bielle (10) de grande longueur qui est elle même solidaire de l'axe de sortie, les deux extrémités de cette bielle (10) de grande longueur étant respectivement guidées en déplacement chacune le long d'un guide, et **en ce que** l'angle de débattement entre ces deux butées est supérieur à 180°, les mouvements de la bielle (10) se trouvant structurellement verrouillés lorsque à la suite d'un surpassement, le plateau manivelle (7) se trouve au voisinage immédiat d'une de ses limites de course.

2. Actionneur selon la revendication 1, **caractérisé en ce qu'**il comporte un moteur asynchrone à stator double.

3. Actionneur selon la revendication 1; **caractérisé en ce qu'**il comporte deux moteurs asynchrone.

4. Actionneur selon l'une des revendications précédentes, **caractérisé en ce que** les moyens de couplage comportent un limiteur de couple.

5. Actionneur selon la revendication 4, **caractérisé en ce que** ledit limiteur de couple est de type magnétique.

6. Actionneur selon l'une des revendications précédentes, **caractérisé en ce que** l'angle de débattement du plateau manivelle (7) entre les deux butées est de l'ordre de 200°.

7. Actionneur selon l'une des revendications précédentes, **caractérisé en ce que** le débattement angulaire possible pour la bielle (10) est de l'ordre de 12 - 13°.

8. Actionneur selon l'une des revendications précédentes, **caractérisé en ce que** les moyens réducteurs comportent des premiers étages munis de roulements à billes précontraints aux paliers.

9. Actionneur selon l'une des revendications précédentes, **caractérisé en ce que** les moyens réducteurs comportent des étages de sortie à bagues lisses.

10. Actionneur pour boîtier d'accrochage de trains d'atterrissage et/ou pour les portes de tels boîtiers, **caractérisé en ce qu'**il est constitué par un actionneur selon l'une des revendications précédentes.

**Claims**

1. Electromechanical actuator comprising at least one electric motor (1), and coupling and gear reduction means that drive an output shaft,
   **characterized in that** these coupling and gear reduction means mesh with a crank plate (7) designed to be driven in rotation with an angular travel limited by two stops, a connecting rod (9) being articulated at one end to a crank pin (8) of the said crank plate (7) and being articulated at its other end to a long connecting rod (10) which is itself integral with the output shaft, the two ends of this long connecting rod (10) each being guided in their travel along a corresponding guide, and **in that** the angular displacement between these two stops is greater than 180°, the movements of the long connecting rod (10) being structurally locked when, following an override, the crank plate (7) is situated directly adjacent to one of its travel limit stops.

2. Actuator according to Claim 1, **characterized in that** it includes a double-stator asynchronous motor.

3. Actuator according to Claim 1, **characterized in that** it includes two asynchronous motors.

4. Actuator according to one of the preceding claims, **characterized in that** the coupling means include a torque limiter.

5. Actuator according to Claim 4, **characterized in that** the said torque limiter is of the magnetic type.

6. Actuator according to one of the preceding claims, **characterized in that** the angular displacement of the crank plate (7) between the two stops is of the order of 200°.

7. Actuator according to one of the preceding claims, **characterized in that** the possible angular displacement of the long connecting rod (10) is of the order of 12-13°.

8. Actuator according to one of the preceding claims, **characterized in that** the reduction means include first stages equipped with preloaded ball bearing races at the bearings.

9. Actuator according to one of the preceding claims, **characterized in that** the reduction means include output stages with plain journal bearings.

10. Actuator for landing gear uplock box and/or for the doors of such boxes, **characterized in that** it consists of an actuator according to one of the preceding claims.

**Patentansprüche**

1. Elektromechanischer Aktuator, der wenigstens einen Elektromotor (1) umfaßt, sowie Mittel zur Kupplung und zur Untersetzung, die eine Ausgangsachse antreiben,
**dadurch gekennzeichnet, daß** diese Mittel zur Kupplung und zur Untersetzung mit einer Kurbelscheibe (7) im Eingriff sind, die dafür eingerichtet ist, mit einem durch zwei Anschläge begrenzten Winkelweg gedreht zu werden, wobei eine kleine Pleuelstange (9) an einem Ende auf einem Zapfen (8) der Kurbelscheibe (7) drehbar befestigt ist und an ihrem anderen Ende mit einer Pleuelstange (10) großer Länge drehbar verbunden ist, die ihrerseits mit der Ausgangsachse fest verbunden ist, wobei die beiden Enden dieser Pleuelstange (10) großer Länge jeweils für Verschiebungen entlang einer Führung geführt werden, und dadurch, daß der Winkelausschlag zwischen diesen beiden Anschlägen größer als 180° ist, wobei die Bewegungen der Pleuelstange (10) konstruktionsbedingt blockiert sind, wenn sich die Kurbelscheibe (7) nach dem überschreiten eines Ausschlags in unmittelbarer Nachbarschaft zu einer ihrer Wegbegrenzungen befindet.

2. Aktuator nach Anspruch 1, **dadurch gekennzeichnet, daß** er einen Asynchronmotor mit Doppelstator umfaßt.

3. Aktuator nach Anspruch 1, **dadurch gekennzeichnet, daß** er zwei Asynchronmotoren umfaßt.

4. Aktuator nach einem der vorhergehenden Ansprüche, **dadurch gekennzeichnet, daß** die Mittel zur Kopplung einen Drehmomentbegrenzer umfassen.

5. Aktuator nach Anspruch 4, **dadurch gekennzeichnet, daß** der Drehmomentbegrenzer vom Magnettyp ist.

6. Aktuator nach einem der vorhergehenden Ansprüche, **dadurch gekennzeichnet, daß** der Winkelausschlag der Kurbelscheibe (7) zwischen den beiden Anschlägen etwa 200° beträgt.

7. Aktuator nach einem der vorhergehenden Ansprüche, **dadurch gekennzeichnet, daß** für die Pleuelstange (10) der mögliche Winkelausschlag in etwa 12 - 13° beträgt.

8. Aktuator nach einem der vorhergehenden Ansprüche, **dadurch gekennzeichnet, daß** die Untersetzungsmittel erste Stufen umfassen, die mit in den Lagern vorgespannten Kugellagern ausgestattet sind.

9. Aktuator nach einem der vorhergehenden Ansprüche, **dadurch gekennzeichnet, daß** die Untersetzungsmittel Ausgangsstufen mit glatten Buchsen umfassen.

10. Aktuator für Aufhängungsgehäuse von Fahrgestellen und/oder für die Klappen solcher Gehäuse, **dadurch gekennzeichnet, daß** er durch einen Aktuator gemäß einem der vorhergehenden Ansprüche gebildet wird.

FIG.1

FIG.2

FIG.3

FIG_4

FIG.5

FIG.6

Déplacements

Angles

FIG.7